(19) Europäisches Patentamt / European Patent Office / Office européen des brevets

(11) **EP 3 207 628 B1**

(12) **EUROPÄISCHE PATENTSCHRIFT**

(45) Veröffentlichungstag und Bekanntmachung des Hinweises auf die Patenterteilung:
**15.09.2021 Patentblatt 2021/37**

(21) Anmeldenummer: **15798309.9**

(22) Anmeldetag: **19.10.2015**

(51) Int Cl.:
*H02M 3/335* (2006.01)   *H02M 1/00* (2006.01)
*H05B 33/08* (2020.01)

(86) Internationale Anmeldenummer:
**PCT/AT2015/050260**

(87) Internationale Veröffentlichungsnummer:
**WO 2016/058021 (21.04.2016 Gazette 2016/16)**

(54) **BETRIEBSSCHALTUNG ZUR VERSORGUNG EINES LEUCHTMITTELS, LED-KONVERTER UND VERFAHREN ZUM BETREIBEN EINER BETRIEBSSCHALTUNG**

OPERATING CIRCUIT FOR ENERGIZING A LAMP, LED CONVERTER, AND METHOD FOR OPERATING AN OPERATING CIRCUIT

CIRCUIT DE FONCTIONNEMENT POUR ALIMENTER UN MOYEN D'ÉCLAIRAGE, CONVERTISSEUR ET PROCÉDÉ POUR FAIRE FONCTIONNER UN CIRCUIT DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.10.2014 DE 102014221101**
**02.02.2015 AT 352015 U**

(43) Veröffentlichungstag der Anmeldung:
**23.08.2017 Patentblatt 2017/34**

(73) Patentinhaber: **Tridonic GmbH & Co. KG**
**6851 Dornbirn (AT)**

(72) Erfinder: **DUENSER, Mathias**
**6700 Bludenz (AT)**

(74) Vertreter: **Banzer, Hans-Jörg**
**Kraus & Weisert**
**Patentanwälte PartGmbB**
**Thomas-Wimmer-Ring 15**
**80539 München (DE)**

(56) Entgegenhaltungen:
EP-A1- 2 493 063   EP-A1- 2 770 623
EP-A2- 2 741 409   WO-A2-2010/035155

US-A- 5 517 397   US-A1- 2011 037 414
US-A1- 2011 181 205   US-A1- 2011 187 280
US-A1- 2012 248 998   US-A1- 2012 274 136
US-A1- 2014 152 192   US-A1- 2014 211 510

- Fairchild Semiconductor Corporation: "AN-9729. LED Application Design Guide Using Half-Bridge LLC Resonant Converter for 100W Street Lighting", INTERNET CITATION, 16. November 2012 (2012-11-16), Seiten 1-14, XP002707759, Gefunden im Internet: URL:http://www.fairchildsemi.com/an/AN-9729.pdf [gefunden am 2013-07-30]
- Linear Technology: "LT1725 General Purpose Isolated Flyback Controller", , 1 January 2000 (2000-01-01), pages 1-28, XP055299008, Milpitas, CA 95035-7417 Retrieved from the Internet: URL:http://cds.linear.com/docs/en/datashee t/1725fa.pdf [retrieved on 2016-08-31]
- LIU Y-F ET AL: "A NEW CURRENT SENSING SCHEME FOR ZERO-VOLTAGE SWITCHING PHASE-SHIFTED BRIDGE CONVERTER", INTELEC 2000. 22ND. INTERNATIONAL TELECOMMUNICATIONS ENERGY CONFERENCE. PHOENIX, AZ, SEPT. 10 - 14, 2000; [INTELEC. INTERNATIONAL TELECOMMUNICATIONS ENERGY CONFERENCE], NEW YORK, NY : IEEE, US, vol. CONF. 22, 10 September 2000 (2000-09-10), pages 567-573, XP000968740, ISBN: 978-0-7803-6408-0

EP 3 207 628 B1

**Beschreibung**

Die Erfindung betrifft eine Betriebsschaltung zur Versorgung eines Leuchtmittels, einen LED-Konverter und ein Verfahren zum Betreiben einer derartigen Betriebsschaltung. Die Erfindung betrifft insbesondere derartige Vorrichtungen und Verfahren, bei denen ein Leuchtmittel, insbesondere ein Leuchtmittel, das ein oder mehrere Leuchtdioden umfasst, mit einer Betriebsschaltung, die eine Potentialtrennung aufweist, mit Energie versorgt wird.

Wandler mit Potentialtrennung dienen zur galvanisch entkoppelten Übertragung von elektrischer Energie von einer Eingangsseite zu einer Ausgangsseite. Derartige Wandler werden in verschiedenen Anwendungen zur Strom- oder Spannungsversorgung, wie beispielsweise in getakteten Schaltnetzteilen, eingesetzt. Bei getakteten Wandlern werden steuerbare Schalter, die in Form von Leistungsschaltern ausgestaltet sein können, verwendet und getaktet betrieben, um elektrische Energie auf die Ausgangsseite zu übertragen. Eine galvanisch entkoppelte Energieübertragung kann durch Verwendung eines Transformators oder anderen Übertragers erzielt werden. Eine derartige Potentialtrennung wird beispielsweise aus Sicherheitsgründen bei Betriebsgeräten für Leuchtmittel gefordert, um einen ELV ("Extra-Low Voltage")-Bereich durch eine Potentialbarriere von Bereichen mit höherer Spannung zu trennen.

Zur Steuerung oder Regelung des Wandlers kann Information über eine Ausgangsspannung des Wandlers benötigt werden. Bei primärseitig getakteten Wandlers kann dies dadurch erreicht werden, dass die Ausgangsspannung an einer Sekundärseite des Wandlers erfasst und über die Potentialbarriere zur Primärseite übertragen wird. Hierzu können Optokoppler verwendet werden.

Dies führt zu erhöhten Kosten und erhöhtem Aufwand.

US 2012/248998 A1 offenbart in Abbildung 4 eine Maximalwerterfassung der Ausgangsspannung mittels einer Hilfswicklung in einem Sperrwandler zur Ansteuerung von LEDs.

US 2014/211510 A1 offenbart in Abbildungen 2 und 3 eine Maximalwerterfassung der Ausgangsspannung mittels einer Hilfswicklung in einem Sperrwandler.

US 5 517 397 A offenbart eine Ausgangsspannungserfassung in einem Sperrwandler welche Schaltspannungsspitzen blockiert und eine Ausgangsstromkompensation vornimmt.

Linear Technology: "LT1725 General Purpose Isolated Flyback Controller" offenbart auf Seite 9 die prinzipiellen Grundlagen einer ausgangsstromabhängigen Kompensation der auf die Primärseite reflektierten Ausgangsspannung bei einem Sperrwandler.

Fairchild Semiconductor Corporation: "AN-9729. LED Application Design Guide Using Half-Bridge LLC Resonant Converter for 100W Street Lighting" offenbart einen LLC Halbrückenresonanzwandler zur Ansteuerung von LEDs.

US 2011/187280 A1, US 2011/181205 A1 offenbaren, dass LLC Halbbrückenresonanzwandler eine bekannte Alternative zu Sperrwandlern darstellen.

WO 2010/035155 A2, EP 2 770 62 3 A1, EP 2 493 063 A1, US 2011/037414 A1, sowie LIU Y-F ET AL: "A NEW CURRENT SENSING SCHEME FOR ZERO-VOLTAGE SWITCHING PHASE-SHIFTED BRIDGE CONVERTER", INTELEC 2000. 22ND. INTERNATIONAL TELECOMMUNICATIONS ENERGY CONFERENCE. PHOENIX, AZ, SEPT. 10 - 14, 2000; Bd. CONF. 22, 10. September 2000 (2000-09-10), Seiten 567-573  offenbaren die Erfassung eines Ausgangsstroms in einem isolierten Wandler mittels eines zusätzlichen Transformators.

Es besteht ein Bedarf an weiteren Vorrichtungen und Verfahren, bei denen der schaltungstechnische Aufwand und/oder die Kosten, die bei herkömmlichen Vorrichtungen zum Überbrücken einer Potentialbarriere verbunden sind, reduziert oder vermieden werden können. Es besteht ein Bedarf an derartigen Vorrichtungen und Verfahren, die eine Steuerung oder Regelung der Ausgangsleistung im laufenden Betrieb ermöglichen. Dies wird mittels einer Betriebsschaltung nach Anspruch 1 und einem Verfahren nach Anspruch 6 erreicht. Die abhängigen Ansprüche definieren Ausführungsformen.

Es wird eine Induktivität auf einer Primärseite einer Betriebsschaltung verwendet, um eine Ausgangsspannung der Betriebsschaltung für ein Leuchtmittel zu erfassen. Die Induktivität ist induktiv mit einer Sekundärspule eines Wandlers der Betriebsschaltung gekoppelt.

Die Induktivität kann beispielsweise eine von der Primärspule des Wandlers verschiedene Wicklung umfassen.

Zur Bestimmung der Ausgangsspannung wird ein Maximalwert der Spannung an der Induktivität in wenigstens einem Schaltzyklus des getakteten Wandlers erfasst. Von dem Maximalwert wird eine Spannungskorrektur subtrahiert, um die Ausgangsspannung zu ermitteln. Die Spannungskorrektur hängt von einem Ausgangsstrom der Betriebsschaltung ab. Die Spannungskorrektur kann von einem differenziellen Widerstand einer Diode und von dem Ausgangsstrom abhängen.

Es wird eine Betriebsschaltung zur Versorgung eines Leuchtmittels, das wenigstens eine Leuchtdiode umfasst, angegeben. Die Betriebsschaltung weist eine Primärseite und eine davon galvanisch getrennte Sekundärseite auf. Die Betriebsschaltung umfasst einen getakteten Wandler. Die Betriebsschaltung umfasst eine Erfassungseinrichtung zum Bestimmen einer Ausgangsspannung der Betriebsschaltung, wobei die Erfassungseinrichtung eine an der Primärseite des Wandlers angeordnete Induktivität umfasst, die induktiv mit einer Sekundärspule der Sekundärseite des Wandlers gekoppelt ist.

Es kann somit eine mit der Induktivität an der Primärseite erfasste Spannung verarbeitet werden, um die Ausgangsspannung zu bestimmen. Eine Erfassung der Ausgangsspannung in der sekundärseitigen Schaltung und Rückführung über die SELV-Barriere ist nicht mehr unbedingt erforderlich. Eine Leistungsregelung kann abhängig von der auf der Primärseite mit der Induktivität erfassten Spannung erfolgen, ohne dass die Ausgangsspannung in der sekundärseitigen Schaltung erfasst werden muss.

Die Erfassungseinrichtung ist eingerichtet, um die Ausgangsspannung abhängig von der Spannung an der Induktivität und abhängig von einem Ausgangsstrom der Betriebsschaltung zu bestimmen. Dadurch wird der Spannungsabfall zwischen der Sekundärspule und einem Ausgang der Betriebsschaltung berücksichtigt werden.

Die Erfassungseinrichtung ist eingerichtet, um die Ausgangsspannung abhängig von einem Maximalwert der Spannung an der Induktivität und abhängig von dem Ausgangsstrom zu bestimmen. Der Maximalwert kann jeweils in wenigstens jedem zweiten Schaltzyklus des getakteten Wandlers bestimmt werden. Die Erfassungseinrichtung ist eingerichtet, um die Ausgangsspannung als Differenz zwischen dem Maximalwert der Spannung und einer von dem Ausgangsstrom abhängigen Spannungskorrektur zu bestimmen. Eine Diode kann zwischen der Sekundärspule und einem Ausgang der Betriebsschaltung vorgesehen sein. Die Spannungskorrektur kann ein Produkt des Ausgangsstroms und eines differenziellen Widerstands der Diode sein.

Die Betriebsschaltung umfasst einen Transformator zum Erfassen des Ausgangsstroms. Der Transformator kann wenigstens eine sekundärseitige Induktivität, die zwischen die Sekundärspule und die Diode geschaltet ist, und eine damit induktiv gekoppelte primärseitige Induktivität umfassen.

Die Betriebsschaltung kann eingerichtet sein, um wenigstens einen steuerbaren Schalter des Wandlers abhängig von der bestimmten Ausgangsspannung getaktet zu schalten.

Die Betriebsschaltung kann eingerichtet sein, um eine Schaltfrequenz und/oder einen Schaltschwellenwert für den wenigstens einen steuerbaren Schalter abhängig von der Ausgangsspannung einzustellen.

Die Betriebsschaltung ist für eine Leistungsregelung und/oder eine Leistungslimitierung einer Ausgangsleistung der Betriebsschaltung abhängig von der Ausgangsspannung eingerichtet.

Die Induktivität, die induktiv mit der Sekundärspule gekoppelt ist, kann von einer Primärspule des Wandlers verschieden sein.

Der Wandler ist ein primärseitig getakteter LLC-Resonanzwandler mit Halbbrückenansteuerung.

Ein LED-Konverter nach einem Ausführungsbeispiel umfasst die Betriebsschaltung nach einem Ausführungsbeispiel.

Ein System nach einem Ausführungsbeispiel umfasst den LED-Konverter nach einem Ausführungsbeispiel und ein Leuchtmittel, das mit dem Ausgang der Betriebsschaltung verbunden ist. Das Leuchtmittel umfasst wenigstens eine Leuchtdiode.

Nach Anspruch 6 wird ein Verfahren zum Betreiben einer Betriebsschaltung zur Versorgung eines Leuchtmittels, das wenigstens eine Leuchtdiode umfasst, angegeben. Die Betriebsschaltung weist eine Primärseite und eine davon galvanisch getrennte Sekundärseite auf. Das Verfahren umfasst ein getaktetes Schalten wenigstens eines steuerbaren Schalters eines Wandlers. Das Verfahren umfasst ein Bestimmen einer Ausgangsspannung der Betriebsschaltung abhängig von einer Spannung an einer Induktivität an der Primärseite des Wandlers, wobei die Induktivität induktiv mit einer Sekundärspule der Sekundärseite des Wandlers gekoppelt ist.

Bei dem Verfahren wird die Ausgangsspannung abhängig von der Spannung an der Induktivität und abhängig von einem Ausgangsstrom der Betriebsschaltung bestimmen. Dadurch wird ein Spannungsabfall zwischen der Sekundärspule und einem Ausgang der Betriebsschaltung berücksichtigt.

Bei dem Verfahren wird die Ausgangsspannung abhängig von einem Maximalwert der Spannung an der Induktivität und abhängig von dem Ausgangsstrom bestimmt. Der Maximalwert kann jeweils in wenigstens jedem zweiten Schaltzyklus des getakteten Wandlers bestimmt werden.

Bei dem Verfahren wird die Ausgangsspannung als Differenz zwischen dem Maximalwert der Spannung und einer von dem Ausgangsstrom abhängigen Spannungskorrektur bestimmt werden.

Eine Diode kann zwischen der Sekundärspule und einem Ausgang der Betriebsschaltung vorgesehen sein. Die Spannungskorrektur kann ein Produkt des Ausgangsstroms und eines differenziellen Widerstands der Diode sein.

Das Verfahren umfasst ein Erfassen des Ausgangsstroms unter Verwendung eines Transformators. Der Transformator kann wenigstens eine sekundärseitige Induktivität, die zwischen die Sekundärspule und die Diode geschaltet ist, und eine damit induktiv gekoppelte primärseitige Induktivität umfassen.

Der wenigstens eine steuerbare Schalter des Wandlers kann abhängig von der bestimmten Ausgangsspannung getaktet geschaltet werden.

Eine Schaltfrequenz und/oder ein Schaltschwellenwert für ein Schalten des wenigstens einen steuerbaren Schalters kann abhängig von der Ausgangsspannung eingestellt werden.

Der wenigstens eine steuerbare Schalter wird so getaktet geschaltet, dass eine Leistungsregelung und/oder eine Leistungslimitierung einer Ausgangsleistung der Betriebsschaltung abhängig von der Ausgangsspannung und dem Ausgangsstrom erfolgt.

Die Induktivität, die induktiv mit der Sekundärspule gekoppelt ist, kann von einer Primärspule des Wandlers verschieden sein.

Das Verfahren kann von der Betriebsschaltung oder dem LED-Konverter nach einem Ausführungsbeispiel automatisch ausgeführt werden.

Die Erfindung wird nachfolgend unter Bezugnahme auf die beigefügte Zeichnung anhand bevorzugter Ausführungsbeispiele näher erläutert.

FIG. 1 zeigt eine schematische Darstellung eines Beleuchtungssystems mit einem LED-Konverter nach einem Ausführungsbeispiel.

FIG. 2 zeigt ein Schaltbild einer Betriebsschaltung nach einem Ausführungsbeispiel.

FIG. 3 zeigt ein Schaltbild einer Betriebsschaltung nach einem weiteren Ausführungsbeispiel.

FIG. 4 zeigt ein Schaltbild einer Betriebsschaltung nach einem weiteren Ausführungsbeispiel.

FIG. 5 zeigt ein Schaltbild einer Betriebsschaltung nach einem weiteren Ausführungsbeispiel.

FIG. 6 illustriert eine auf einer Primärseite eines Wandlers erfasste Spannung zum Bestimmen der Ausgangsspannung.

FIG. 7 illustriert die Bestimmung der Ausgangsspannung abhängig von der auf der Primärseite erfassten Spannung.

FIG. 8 ist ein Flussdiagramm eines Verfahrens nach einem Ausführungsbeispiel.

Die Erfindung wird nachfolgend anhand von Ausführungsbeispielen unter Bezugnahme auf die Figuren näher beschrieben, in denen identische Bezugszeichen identische oder korrespondierende Elemente repräsentieren. Die Merkmale verschiedener Ausführungsbeispiele können im Rahmen des durch die Ansprüche definierten Schutzumfangs miteinander kombiniert werden.

Die Merkmale der unabhängigen Ansprüche sind bei allen Ausführungsformen erforderlich und nicht optional.

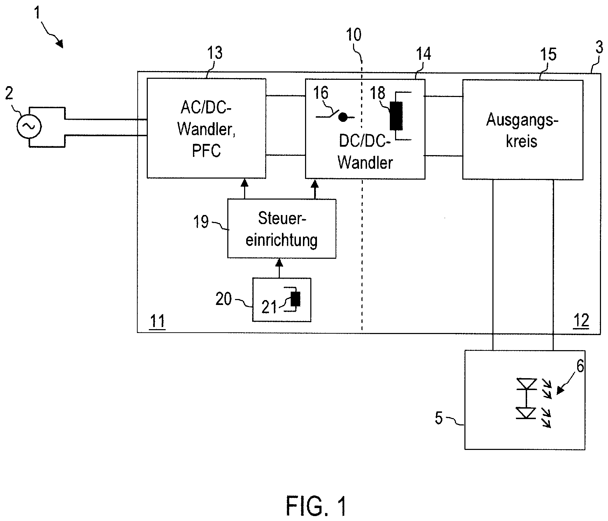

FIG. 1 zeigt ein System 1, bei dem ein LED-Konverter 3 nach einem Ausführungsbeispiel ein Leuchtmittel 5 mit Energie versorgt. Das Leuchtmittel 5 kann eine Leuchtdiode (LED) oder mehrere LEDs umfassen. Die LEDs 6 können anorganische oder organische LEDs sein.

Der LED-Konverter 3 ist im Betrieb eingangsseitig mit einer Versorgungsspannungsquelle 2, beispielsweise einer Netzspannung, gekoppelt. Der LED-Konverter 3 kann einen Gleichrichter 13 umfassen. Der LED-Konverter 3 kann optional eine Leistungsfaktorkorrekturschalung (PFC, "Power Factor Correction") 13 umfassen. Der LED-Konverter 3 umfasst einen Wandler 14. Der Wandler 11 kann ein DC/DC-Wandler sein

Der Wandler 14 ist als getakteter Wandler ausgestaltet und weist einen steuerbaren Schalter 16 auf. Der steuerbare Schalter 16 kann ein Leistungsschalter sein. Der steuerbare Schalter 16 kann ein Transistor mit isolierter Gateelektrode sein. Der steuerbare Schalter 16 kann ein MOSFET sein. Wie noch ausführlich beschrieben wird, ist der Wandler 14 ein primärseitig getakteter Wandler, bei dem eine Steuereinrichtung 19 den steuerbaren Schalter 16 getaktet schaltet. Während in Figur 1 schematisch nur ein steuerbarer Schalter 16 dargestellt ist, kann der Wandler 14 auch mehrere primärseitige steuerbare Schalter aufweisen, beispielsweise für eine Halbbrückenansteuerung des Wandlers 14.

Der Wandler 14 weist eine galvanische Trennung auf. Eine Primärseite des Wandlers 14 und eine Sekundärseite des Wandlers 14 sind galvanisch getrennt. Dadurch wird eine Potentialtrennung zwischen unterschiedlichen Bereichen 11, 12 des LED-Konverters erzeugt. Die Ausgangsseite 12 mit der Sekundärseite des Wandlers kann als SELV ("Separated Extra Low Voltage")-Bereich ausgestaltet sein und kann durch eine SELV-Barriere 10 von der Eingangsseite 13 getrennt sein. Die Potentialbarriere 10 muss nicht notwendig eine SELV-Barriere sein, sondern kann auch eine andere Potentialbarriere sein.

Der LED-Konverter 3 weist einen Ausgangskreis 15 auf, der mit einer Sekundärspule 18 des Wandlers 14 gekoppelt ist. Der LED-Konverter 3 ist eingerichtet, um eine Ausgangsspannung am Ausgang des LED-Konverters 3 durch eine Spannungsmessung zu bestimmen, die an der Primärseite 11 durchgeführt wird. Dazu umfasst die Betriebsschaltung des LED-Konverters 3 eine Einrichtung 20 zum Bestimmen der Ausgangsspannung. Die Einrichtung 20 umfasst eine Induktivität 21, die auf der Primärseite 11 der Betriebsschaltung angeordnet ist und somit galvanisch von dem Ausgang der Betriebsschaltung getrennt ist. Die Induktivität 21 ist induktiv mit der Sekundärspule 18 des Wandlers 14 gekoppelt.

Wie noch ausführlicher beschrieben wird, wird eine Spannung an der Induktivität 20 erfasst und weiter verarbeitet, um die Ausgangsspannung zu bestimmen. Es wird ein Maximalwert der Spannung an der Induktivität 20 erfasst. Der Maximalwert der Spannung an der Induktivität 20 selbst oder eine daraus abgeleitete Größe kann als Kenngröße für die Ausgangsspannung verwendet werden. Von dem Maximalwert der Spannung an der Induktivität 20, die in einem oder mehreren Schaltzyklen des getakteten Wandlers 14 erfasst wird, wird ein Korrekturterm subtrahiert. Der Korrekturterm hängt von einem Ausgangsstrom des LED-Konverters 3 2. ab.

Die Induktivität 21 kann von einer (in FIG. 1 nicht dargestellten) Primärspule des Wandlers 14 verschieden sein. Die Einrichtung 20 kann so eingerichtet sein, dass die primärseitige Spannungserfassung nicht an der Primärspule des Wandlers 14 selbst erfolgt, sondern an einer davon verschiedenen Induktivität 21. Das Risiko einer Verfälschung aufgrund von Streuinduktivitäten kann somit verringert werden. Die Ausgangsspannung kann zuverlässiger ermittelt werden.

Die Induktivität 21 kann eng gekoppelt zu der Primärspule und der Sekundärspule des Wandlers 14 angeordnet sein. Die Induktivität 21 kann auf demselben Transformatorkern angeordnet sein wie die Sekundärspule 18 und die Primärspule des Wandlers 14.

Die Einrichtung 20 kann einen Spannungsteiler zum Abgreifen der Spannung an der Induktivität 21 umfassen. Der Spannungsteiler kann ein Ohmscher Spannungsteiler sein.

Wie in FIG. 1 schematisch dargestellt ist, kann bei dem LED-Konverter 3 die Ausgangsspannung bestimmt werden, ohne dass dafür eine Messung auf der SELV-Seite durchgeführt werden muss und/oder ohne dass ein entsprechendes Messergebnis über die SELV-Barriere zurückgeführt werden muss. Die Steuereinrichtung 19 ist so eingerichtet, dass sie abhängig von einer primärseitig gemessenen Spannung und dem Ausgangsstrom die Ausgangsspannung des LED-Konverters 3 bestimmt und für eine Leistungsregelung und/oder Leistungslimitierung verwendet.

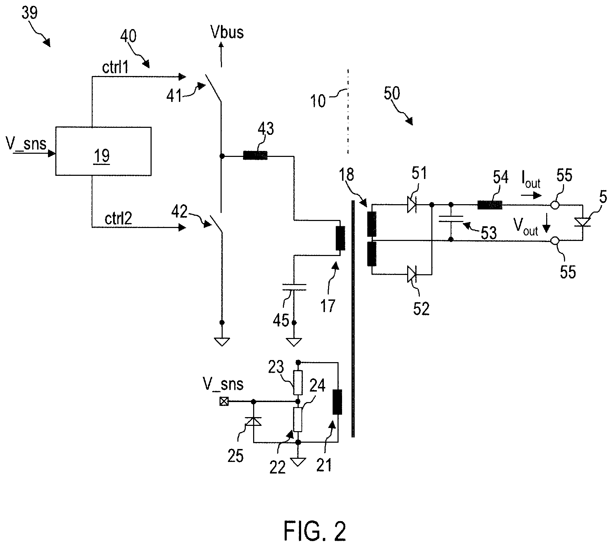

FIG. 2 ist ein Schaltbild einer Betriebsschaltung 39 nach einem Ausführungsbeispiel. Die Betriebsschaltung 39 umfasst einen Wandler mit einer primärseitigen Schaltung 40 und einer sekundärseitigen Schaltung 50. Es liegt Potentialtrennung zwischen der primärseitigen Schaltung 40 und der sekundärseitigen Schaltung 50 vor. Zur Trennung kann ein Transformator mit einer Primärspule 17 und einer Sekundärspule 18 vorgesehen sein.

Der Wandler kann als LLC-Resonanzwandler ausgestaltet sein. Die Hauptinduktivität des Transformators kann als eine der Induktivitäten des LLC-Resonanzkreises wirken. Ein separates induktives Element 43 oder eine Streuinduktivität des Transformators kann als weitere Induktivität des LLC-Resonanzkreises wirken. Ein kapazitives Element oder eine Streukapazität kann eine Kapazität des LLC-Resonanzkreises bilden. Gemäß der allgemeinen Terminologie in diesem technischen Gebiet wird hier der Begriff "LLC-Resonanzkreis" oder "LLC-Resonanzwandler" so verwendet, dass damit ein Resonanzkreis mit zwei Induktivitäten und einer Kapazität oder ein entsprechender Wandler bezeichnet wird, wobei es nicht darauf ankommt, ob wie in FIG. 2 dargestellt eine der Induktivitäten zwischen die Kapazität 45 und die Induktivität 43 geschaltet ist oder ob der Kondensator zwischen die beiden Induktivitäten geschaltet ist. Ebenso kann die Induktivität 43 in die Primärspule 17 des Transformators als Streuinduktivität integriert sein.

Der Wandler kann ein DC/DC-Wandler sein. Die sekundärseitige Schaltung 50 kann ein SELV-Bereich sein, der durch eine SELV-Barriere 10 vom primärseitigen Bereich getrennt ist. Die primärseitige Schaltung kann alle Komponenten beinhalten, die nicht zum SELV-Bereich gehören.

Die primärseitige Schaltung 40 umfasst eine Halbbrückenschaltung mit einem ersten Schalter 41, der ein Leistungsschalter sein kann, und einem zweiten Schalter 42, der ein Leistungsschalter sein kann. Der erste Schalter 41 und der zweite Schalter 42 können identisch sein, und die Halbbrückenschaltung kann als symmetrische Halbbrückenschaltung ausgebildet sein. Der Resonanzkreis ist mit einem Knoten zwischen dem ersten Schalter 41 und dem zweiten Schalter 42 verbunden. Der Resonanzkreis ist mit der Mitte der Halbbrückenschaltung zwischen den zwei Schaltern 41 und 42 verbunden. Ein erster Anschluss der ersten Induktivität 43 des LLC-Resonanzkreises kann mit dem Knoten zwischen dem ersten Schalter 41 und dem zweiten Schalter 42 der Halbbrückenschaltung verbunden sein. Ein zweiter Anschluss der ersten Induktivität 43 kann mit einem ersten Anschluss einer weiteren Induktivität des LLC-Resonanzkreises verbunden sein. Ein zweiter Anschluss der weiteren Induktivität kann mit der Kapazität 45 des Resonanzkreises verbunden sein.

Im Betrieb des Wandlers 39 steuert die Steuereinrichtung 19 den ersten Schalter 41 und den zweiten Schalter 42. Dabei kann jeder der Schalter jeweils mit derselben vorgegebenen Frequenz ein- und ausgeschaltet werden. Die Steuereinrichtung 19 kann den ersten Schalter 41 und den zweiten Schalter 42 so steuern, dass immer maximal einer der beiden Schalter leitend geschaltet ist. Der erste Schalter 41 und der zweite Schalter 42 können von der Steuereinrichtung 19 wechselseitig getaktet betrieben werden. Eine Totzeit zwischen dem Ausschalten eines Schalters und dem Einschalten des jeweils anderen Schalters kann klein sein, insbesondere viel kleiner als das Inverse der Schaltfrequenz.

Die primärseitige Schaltung 40 ist so ausgestaltet, dass eine Spannung V_sns erfasst werden kann, die an der Induktivität 21 induziert wird. Die Induktivität 21 ist von der Primärspule 17 verschieden, so dass die Spannungserfassung nicht unmittelbar an der Primärspule 17 erfolgt. Die Induktivität 21 ist induktiv mit der Sekundärspule 18 gekoppelt.

Die sekundärseitige Schaltung 50 weist einen mit der Sekundärspule 18 verbundenen Gleichrichter auf, der beispielsweise durch eine erste Diode 51 und eine zweite Diode 52 gebildet sein kann. Ein Ausgangskondensator 53 kann vorgesehen sein. Der Ausgangskondensator 53 kann direkt oder über eine optional vorhandene Induktivität 54 mit einem Ausgang 55 der Betriebsschaltung gekoppelt sein.

Eine mit dem Ausgang 55 der Betriebsschaltung verbundene Last 5 kann eine LED, eine LED-Strecke, mehrere LEDs oder mehrere LED-Strecken umfassen. Die LEDs können LEDs eines LED-Moduls sein.

Die Ausgangsspannung am Ausgang 55 der Betriebsschaltung wird basierend auf der in der primärseitigen Schaltung 40 erfassten Spannung V sns bestimmt. Die in der primärseitigen Schaltung 40 an der Induktivität 21 erfasste Spannung V sns wird der Steuereinrichtung 19 zugeführt. Die in der primärseitigen Schaltung 40 an der Induktivität 21 erfasste Spannung V sns kann A/Dgewandelt werden, bevor sie der Steuereinrichtung 19 zugeführt wird.

Wenn die Schalter 41, 42 der Halbbrückenschaltung geschaltet werden, wird Energie übertragen, bis der Kondensator 53 geladen ist. Die Last 5 klemmt die Spannung am Kondensator 53 auf einen Wert, der der Vorwärtsspannung der LEDs des Leuchtmittels entspricht. Die Spannung an der Sekundärspule entspricht der Ausgangsspannung der Schaltung minus der über den Gleichrichterdioden 51, 52 abfallenden Spannung.

Entsprechend können aus dem Maximalwert der Spannung, die beim Schalten der Schalter 41, 42 an der Sekundärspule 18 auftritt, Informationen über die Ausgangsspannung am Ausgang 55 abgeleitet werden. Dazu wird der Maximalwert der Spannung an der Induktivität 21 beispielsweise über einen Spannungsteiler 22 erfasst.

Der Spannungsteiler 22 kann ein hochohmiger Spannungsteiler sein. Der Spannungsteiler 22 kann ein Ohmscher Spannungsteiler mit wenigstens zwei Widerständen 23, 24 sein. Eine Diode 25 kann optional parallel zu einem Widerstand 24 des Spannungsteilers vorgesehen sein. Die Diode 25 kann dem Schutz eines nachfolgenden A/D-Wandlers und/oder einer nachfolgenden integrierten Halbleiterschaltung, beispielsweise der Steuereinrichtung 19, dienen, um negativen Spannungen in der zweiten Schaltphase auf eine Minimalspannung zu begrenzen. Im Falle von negativen Spannungen wird die Spannung auf die Durchflussspannung der Diode begrenzt.

Die Spannung V_sns am Widerstand 24 kann, optional nach A/D-Wandlung, der Steuereinrichtung 19 zugeführt werden.

Um die Ausgangsspannung der Betriebsschaltung 39 zu bestimmen, kann die Vorwärtsspannung der Gleichrichterdioden 31, 32 berücksichtigt werden. Die Ausgangsspannung kann ermittelt werden als

$$V_{out} = V\_sns - V_c(I_{out}) \tag{1}$$

wobei V sns der Maximalwert der über den Spannungsteiler 22 an der Induktivität 21 erfassten Spannung und $V_c(I_{out})$ ein vom Ausgangsstrom der Betriebsschaltung abhängiger Korrekturterm ist.

Die Ausgangsspannung kann beispielsweise bestimmt werden als

$$V_{out} = V\_sns - R_{diff} \cdot I_{out} \tag{2}$$

wobei $R_{diff}$ der differenzielle Widerstand der Gleichrichterdioden 51, 52 ist.

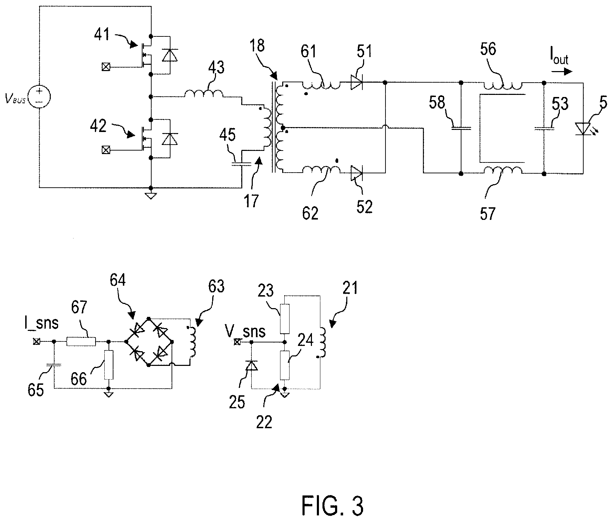

Bei der Bestimmung der Ausgangsspannung wird der Ausgangsstrom $I_{out}$ mit einem weiteren Transformator gemessen, wie unter Bezugnahme auf FIG. 3 näher beschrieben wird.

Die Ausgangsspannung, die anhand der Spannung an der Induktivität 21 ermittelt wird, kann für unterschiedliche Zwecke eingesetzt werden. Beispielsweise können Fehlerzustände wie ein Kurzschluss am Ausgang 55 oder ein offener Ausgang 55 oder eine Überspannung am Ausgang 55 erkannt werden. Es kann eine Notabschaltung oder eine Leistungslimitierung der Ausgangsleistung abhängig von der Spannung an der Induktivität 21 erfolgen.

Die Spannung an der Induktivität 21 kann auch als Regelgröße für eine Leistungsregelung verwendet werden. Eine Regelung der Ausgangsleistung der Betriebsschaltung kann so mit der primärseitig erfassten Spannung an der Induktivität 21 erfolgen.

FIG. 3 ist ein Schaltbild einer Betriebsschaltung nach einem weiteren Ausführungsbeispiel.

Die Betriebsschaltung ist derart eingerichtet, dass ein Ausgangsstrom der Betriebsschaltung durch eine Messung bestimmt wird. Es ist ein Transformator für die Strommessung vorgesehen, der wenigstens eine Induktivität 61, 62 umfasst. Die wenigstens eine Induktivität 61, 62 kann zwischen die Sekundärspule 18 und die Gleichrichterdiode 51, 52 geschaltet sein. Es kann eine erste Induktivität 61 im Pfad zwischen der Sekundärspule 18 und der Gleichrichterdiode 51 vorhanden sein. Es kann eine zweite Induktivität 62 im Pfad zwischen der Sekundärspule 18 und der Gleichrichterdiode 52 vorhanden sein.

Die wenigstens eine Induktivität (61, 62) ist über die Potentialbarriere induktiv mit einer Induktivität 63 des Transformators für die Strommessung gekoppelt. Die Induktivität 63 ist auf der Primärseite der Betriebsschaltung vorgesehen. Die Induktivität kann über einen Gleichrichter 64 und einen Widerstand mit einem Kondensator 65 verbunden sein. Ein weiterer Widerstand 66 kann parallel zu dem Kondensator 65 geschaltet sein. Die Spannung am Kondensator 65 ist proportional zum Ausgangsstrom und stellt einen Messwert I_sns dar, der auf der Primärseite der Betriebsschaltung erfassbar ist und den Ausgangsstrom repräsentiert.

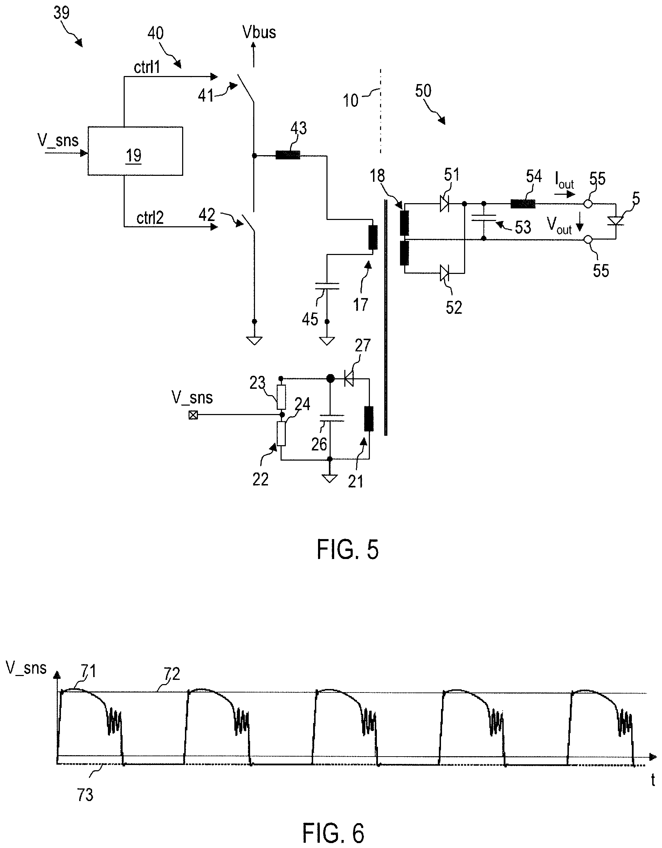

Der Gleichrichter 64 kann beispielsweise auch als aktiver Gleichrichter ausgebildet sein. Der aktive Gleichrichter kann beispielsweise durch vier aktive Gleichricht-Schalter, beispielsweise MOSFET oder Bipolartransistoren, gebildet werden. Die Steuereinrichtung 19 kann eine erste Diagonale des aktiven Gleichrichters synchron mit dem ersten Schalter 41 des Wandlers 14 aktiviert/deaktiviert, und wobei die Steuereinrichtung 19 eine zweite Diagonale des aktiven Gleichrichters synchron mit dem zweiten Schalter 42 des Wandlers 14 aktiviert/deaktiviert, und wobei jeweils nur die erste oder die zweite Diagonale aktiv ist. Hinsichtlich der Anordnung und der Funktion dieser Variante wird auf die DE 102014214744.1 und insbesondere die Fig. 6 und dazugehörige Beschreibung verweisen.

In einer alternativen Variante kann der aktive Gleichrichter auch durch zwei aktive Gleichrichter-Schalter gebildet werden. Die Schaltung mit zwei Gleichrichter-Schaltern kann derart ausgelegt sein, dass die Steuereinrichtung 19 die Induktivität 63 des Transformators durch Ansteuern eines ersten Gleichrichter-Schalters synchron mit dem zweiten Schalter 42 des Wandlers 14 oder durch Ansteuern eines zweiten Gleichrichter-Schalters synchron mit einem ersten Schalter 41 des Wandlers 14 mit Masse verbinden kann. Hinsichtlich der Anordnung und der Funktion dieser Variante wird auf die DE 102014214746.8 und insbesondere die Fig. 6 und dazugehörige Beschreibung verweisen.

Der Messwert I_sns, der den Ausgangsstrom der Betriebsschaltung repräsentiert, wird in Kombination mit der an der Induktivität 63 erfassten Spannung V_sns verwendet, um die Ausgangsspannung der Betriebsschaltung zu bestimmen. Beispielsweise kann die Ausgangsspannung gemäß Gleichung (2) bestimmt werden.

Die Betriebsschaltung kann optional eine Kapazität 58 und/oder wenigstens eine Induktivität 56, 57 an der Sekundärseite umfassen. Diese Komponenten können auch weggelassen werden. Beispielsweise kann abhängig davon, ob die Betriebsschaltung als Konstantstromquelle oder als Konstantspannungsquelle betrieben werden soll, die Induktivität 56, 57 weggelassen werden.

Bei den Schaltungen, wie sie unter Bezugnahme auf FIG. 2 und FIG. 3 näher beschrieben wurden, kann die Spannung V_sns jeweils abgetastet werden, um einen Maximalwert der Spannung an der Induktivität 21 zu bestimmen. Die Diode 25 klemmt eine negative Spannung ab, so dass die Bestimmung des Maximalwerts in jeder zweiten Halbwelle bei positiven Spannungen ausgeführt werden kann. Von dem jeweils bestimmten Maximalwert wird ein vom Ausgangsstrom der Betriebsschaltung abhängiger Korrekturterm subtrahiert, um die Ausgangsspannung zu ermitteln. Zum Bestimmen des Maximalwerts der Spannung an der Induktivität 21, die über den Spannungsteiler 22 gemessen wird, kann jeweils eine A/D-Wandlung und digitale Weiterverarbeitung erfolgen.

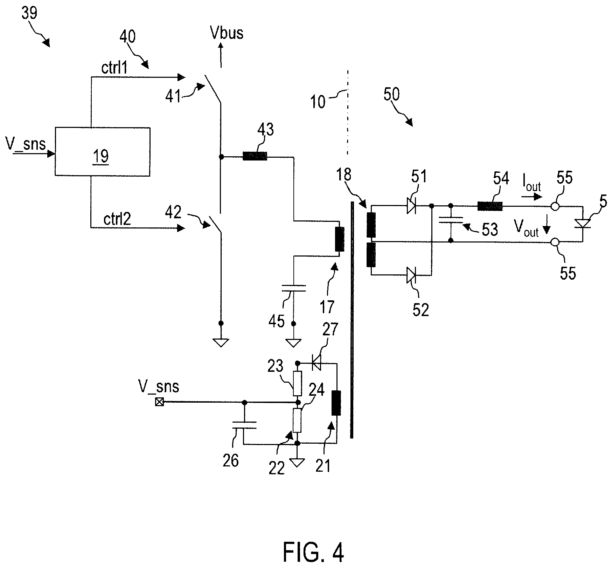

Bei weiteren Ausgestaltungen kann ein Kondensator parallel zum Widerstand 22 vorgesehen sein, wie unter Bezugnahme auf FIG. 4 näher erläutert wird. FIG. 4 ist ein Schaltbild einer Betriebsschaltung nach einem weiteren Ausführungsbeispiel. Die Einrichtung zum Bestimmen der Ausgangsspannung umfasst einen Kondensator 26, der parallel zu einem Widerstand 24 des Spannungsteilers 22 geschaltet ist. Zwischen dem Spannungsteiler 22 und der Induktivität 21 ist eine Diode 27 vorgesehen. Der Kondensator 26 ist parallel zu einem der Widerstände des Spannungsteilers 22 geschaltet, beispielsweise parallel zu dem Widerstand 24.

Der Kondensator 26 wird in einer Phase jedes Schaltzyklus jeweils über die Diode 27 und den Widerstand 23 geladen. Der Kondensator 26 dient zur Tiefpassfilterung. Am Kondensator 26 liegt eine Spannung an, die den Maximalwert der Spannung an der Induktivität 21 repräsentiert. Wenn sich die Ausgangsspannung der Betriebsschaltung ändert, kann sich der Kondensator 26 langsam über den Widerstand 24 entladen, bis die Spannung am Kondensator 26 erneut einen die Ausgangsspannung der Betriebsschaltung repräsentierenden Wert aufweist.

Die Spannung am Kondensator 26 ist eine Gleichspannung, die die Maximalspannung der an der Induktivität 21 induzierten Spannung repräsentiert. Diese Spannung kann der Steuereinrichtung 19 zugeführt werden. Eine zeitliche Abtastung und Bestimmung des Maximalwerts der Spannung muss nicht mehr unbedingt ausgeführt werden.

FIG. 5 ist ein Schaltbild einer Betriebsschaltung nach einem weiteren Ausführungsbeispiel. Die Einrichtung zum Bestimmen der Ausgangsspannung umfasst einen Kondensator 26, der parallel zu dem Spannungsteiler 22 geschaltet ist. Zwischen dem Kondensator 26 und der Induktivität 21 ist eine Diode 27 vorgesehen.

Der Kondensator 26 wird in einer Phase jedes Schaltzyklus jeweils über die Diode 27 geladen. Am Kondensator 26 liegt eine Spannung an, die den Maximalwert der Spannung an der Induktivität 21 repräsentiert. Wenn sich die Ausgangsspannung der Betriebsschaltung ändert, kann sich der Kondensator 26 langsam über die Widerstände 23, 24 entladen, bis die Spannung am Kondensator 26 erneut einen die Ausgangsspannung der Betriebsschaltung repräsentierenden Wert aufweist.

Die Spannung am Kondensator 26 ist eine Gleichspannung, die die Maximalspannung der an der Induktivität 21 induzierten Spannung repräsentiert. Diese Spannung kann über den Spannungsteiler 22 der Steuereinrichtung 19 zugeführt werden. Eine zeitliche Abtastung und Bestimmung des Maximalwerts der Spannung muss nicht mehr unbedingt ausgeführt werden.

FIG. 6 zeigt eine beispielhafte Spannung V_sns am Widerstand 24, wie sie beispielsweise mit den Schaltungen von FIG. 2 oder FIG. 3 erfasst werden kann. Die Diode 25 klemmt negative Halbwellen bei einer negativen Klemmspannung 73 ab. Die Spannung V_sns am Widerstand 24 weist einen zeitabhängigen Verlauf auf. Ein Maximalwert 71 der Spannung in der positiven Halbwelle repräsentiert einen Wert, der geringfügig größer als die Ausgangsspannung 72 der Betriebsschaltung ist.

Der Maximalwert 71 der Spannung kann durch Abtastung nach D/A-Wandlung oder durch Tiefpassfilterung wie unter Bezugnahme auf FIG. 4 beschrieben ermittelt werden.

Der Maximalwert 71 der Spannung an der Induktivität 21 wird um einen Korrekturterm, der von dem Ausgangsstrom der Betriebsschaltung abhängt, korrigiert.

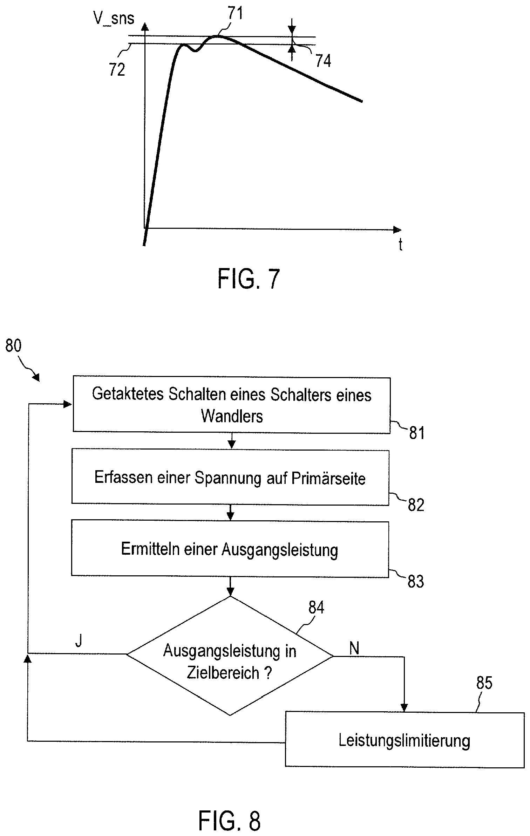

FIG. 7 zeigt eine vergrößerte Darstellung der Spannung an der Induktivität 21, die über den Spannungsteiler 22 erfasst wird. Von dem Maximalwert 71 wird ein Korrekturterm 74 subtrahiert, um die Ausgangsspannung 72 zu ermitteln. Der Korrekturterm 74 ist vom Ausgangsstrom abhängig und kann insbesondere proportional zum Ausgangsstrom sein. Der Korrekturterm 74 berücksichtigt die über die Gleichrichterdioden 51, 52 abfallende Spannung.

Die Ausgangsspannung, die über die an der Induktivität 21 abfallende Spannung bestimmt wird, kann auf unterschiedliche Weise bei der Steuerung oder Regelung verwendet werden. Die an der Induktivität 21 abfallende Spannung oder eine daraus abgeleitete Größe wird als Regelgröße einer Leistungsregelschleife verwendet, mit der die Ausgangsleistung der Betriebsschaltung geregelt wird, oder für eine Leistungslimitierung. Die an der Induktivität 21 abfallende Spannung oder eine daraus abgeleitete Größe kann zur Detektion von Fehlerzuständen, beispielsweise zur Detektion eines Kurzschlusses am Ausgang 55, eines offenen Ausgangs 55 oder einer Überspannung am Ausgang 55, verwendet werden.

FIG. 8 ist ein Flussdiagramm eines Verfahrens 80 nach einem Ausführungsbeispiel.

Bei Schritt 81 wird wenigstens ein Schalter eines Wandlers getaktet geschaltet.

Bei Schritt 82 wird eine Spannung an einer Induktivität 21 auf der Primärseite der Betriebsschaltung erfasst. Die Induktivität 21 ist induktiv mit der Sekundärspule 18 des Wandlers gekoppelt. Die Induktivität 21 ist von der Primärspule des Wandlers verschieden. Die erfasste Spannung ist ein Maximalwert der Spannung an der Induktivität 21, die über einen Spannungsteiler 22 abgegriffen wird.

Bei Schritt 83 wird basierend auf der erfassten Spannung die Ausgangsleistung der Betriebsschaltung ermittelt. Dazu wird ein Korrekturterm, der vom Ausgangsstrom abhängt, von dem erfassten Maximalwert der Spannung an der Induktivität 21 subtrahiert. Der Korrekturterm wird bestimmt, indem der tatsächliche Ausgangsstrom über einen weiteren Transformator 61, 62, 63 erfasst wird. Aus der Ausgangsspannung und dem Ausgangsstrom wird die Ausgangsleistung ermittelt.

Bei Schritt 84 kann überprüft werden, ob die Ausgangsleistung in einem zulässigen Bereich liegt. Dazu kann ermittelt werden, ob die Ausgangsleistung größer als ein erster Schwellenwert und/oder kleiner als ein zweiter Schwellenwert ist. Der zweite Schwellenwert kann größer als der erste Schwellenwert sein. Falls die Ausgangsleistung in dem zulässigen Bereich liegt, kann das Verfahren zu Schritt 81 zurückkehren.

Falls bei Schritt 84 ermittelt wird, dass die Ausgangsleistung nicht in dem zulässigen Bereich liegt, kann bei Schritt 85 eine Prozedur zur Leistungslimitierung ausgeführt werden. Beispielsweise kann die Leistungslimitierung derart erfolgen, dass die Ausgangsleistung immer größer als der erste Schwellenwert oder wenigstens gleich dem ersten Schwellenwert bleibt. Dazu kann beispielweise ein Dimmen zu niedrigeren Strömen verhindert oder der Ausgangsstrom wieder auf eine höhere Stromstärke geregelt werden, falls die Ausgangsleistung für die ermittelte Ausgangsspannung bereits gleich dem ersten Schwellenwert ist. Alternativ oder zusätzlich kann die Leistungslimitierung derart erfolgen, dass die Ausgangsleistung immer kleiner als der zweite Schwellenwert oder maximal gleich dem zweiten Schwellenwert bleibt. Dazu kann beispielweise ein Dimmen zu höheren Strömen verhindert oder der Ausgangsstrom wieder auf eine niedrigere Stromstärke geregelt werden, falls die Ausgangsleistung für die ermittelte Ausgangsspannung bereits gleich dem zweiten Schwellenwert ist.

Während Ausführungsbeispiele unter Bezugnahme auf die Figuren beschrieben wurden, können Abwandlungen bei weiteren Ausführungsbeispielen realisiert werden.

Induktivitäten oder Kapazitäten können jeweils durch entsprechende induktive oder kapazitive Elemente, beispielsweise als Spulen oder Kondensatoren, gebildet werden. Es ist jedoch auch möglich, dass kleinere Induktivitäten, beispielsweise die kleinere Induktivität des LLC-Resonanzkreises, als Streuinduktivität ausgebildet sind. Ähnlich können kleinere Kapazitäten als Streukapazitäten ausgebildet sein.

Wandler und Verfahren nach Ausführungsbeispielen können insbesondere zur Versorgung eines Leuchtmittels, das LEDs umfasst, eingesetzt werden.

**Patentansprüche**

1. Betriebsschaltung zur Versorgung eines Leuchtmittels (5), das wenigstens eine Leuchtdiode (6) umfasst, wobei die Betriebsschaltung eine Primärseite (11) und eine davon galvanisch getrennte Sekundärseite (12) aufweist, und wobei die Betriebsschaltung umfasst:

   einen getakteten Wandler (14), der eine Primärspule (17) und eine Sekundärspule (18) umfasst, wobei der Wandler (14) ein primärseitig getakteter LLC-Resonanzwandler (14) mit Halbbrückenansteuerung ist,

einen Transformator (61, 62, 63) zum Erfassen eines Ausgangsstroms ($I_{out}$) der Betriebsschaltung, und eine Erfassungseinrichtung (20) zum Bestimmen einer Ausgangsspannung ($V_{out}$) der Betriebsschaltung, wobei die Erfassungseinrichtung (20) eine an der Primärseite (11) der Betriebsschaltung angeordnete Induktivität (21), die induktiv mit der Sekundärspule (18) gekoppelt ist, umfasst, wobei die Erfassungseinrichtung (20) eingerichtet ist, um die Ausgangsspannung ($V_{out}$) der Betriebsschaltung als Differenz zwischen einem Maximalwert (71) einer Spannung an der Induktivität (21) und einer von dem Ausgangsstrom ($I_{out}$) der Betriebsschaltung abhängigen Spannungskorrektur (74) zu bestimmen, wobei die Betriebsschaltung für eine Leistungsregelung und/oder eine Leistungslimitierung einer Ausgangsleistung der Betriebsschaltung abhängig von der bestimmten Ausgangsspannung ($V_{out}$) und dem Ausgangsstrom ($I_{out}$) eingerichtet ist.

2. Betriebsschaltung nach Anspruch 1,

wobei eine Diode (51, 52) zwischen der Sekundärspule (18) und einem Ausgang (55) der Betriebsschaltung vorgesehen ist, wobei die Spannungskorrektur (74) ein Produkt des Ausgangsstroms ($I_{out}$) und eines differenziellen Widerstands der Diode ist.

3. Betriebsschaltung nach einem der vorhergehenden Ansprüche, wobei die Betriebsschaltung eingerichtet ist, um wenigstens einen steuerbaren Schalter (41, 42) des Wandlers (14) abhängig von der bestimmten Ausgangsspannung ($V_{out}$) getaktet zu schalten.

4. Betriebsschaltung nach einem der vorhergehenden Ansprüche, wobei die Induktivität (21) von der Primärspule (17) verschieden ist.

5. LED-Konverter, umfassend eine Betriebsschaltung nach einem der vorhergehenden Ansprüche.

6. Verfahren zum Betreiben einer Betriebsschaltung zur Versorgung eines Leuchtmittels (5), das wenigstens eine Leuchtdiode (6) umfasst, wobei die Betriebsschaltung eine Primärseite (11) und eine davon galvanisch getrennte Sekundärseite (12) aufweist, und wobei das Verfahren umfasst:

getaktetes Schalten wenigstens eines steuerbaren Schalters eines Wandlers (14), der eine Primärspule (17) und eine Sekundärspule (18) umfasst, wobei der Wandler (14) ein primärseitig getakteter LLC-Resonanzwandler (14) mit Halbbrückenansteuerung ist, Erfassen eines Ausgangsstroms ($I_{out}$) der Betriebsschaltung mit einem Transformator (61, 62, 63), Bestimmen einer Ausgangsspannung ($V_{out}$) der Betriebsschaltung abhängig von einer Spannung an einer Induktivität (21), wobei die Induktivität (21) auf der Primärseite (11) angeordnet und induktiv mit der Sekundärspule (18) gekoppelt ist, wobei die Ausgangsspannung ($V_{out}$) der Betriebsschaltung als Differenz zwischen einem Maximalwert (71) der Spannung an der Induktivität (21) und einer von dem Ausgangsstrom ($I_{out}$) der Betriebsschaltung abhängigen Spannungskorrektur (74) bestimmt wird, und Regeln und/oder Limitieren einer Ausgangsleistung der Betriebsschaltung abhängig von der bestimmten Ausgangsspannung ($V_{out}$) und dem Ausgangsstrom ($I_{out}$).

7. Verfahren nach Anspruch 6, wobei die Induktivität (21) von der Primärspule (17) verschieden ist.

8. Verfahren nach Anspruch 6 oder 7, das von der Betriebsschaltung nach einem der Ansprüche 1 bis 4 oder von dem LED-Konverter (3) nach Anspruch 5 ausgeführt wird.

**Claims**

1. Operating circuit for energizing a lamp (5) which comprises at least one light-emitting diode (6), wherein the operating circuit has a primary side (11) and a secondary side (12) galvanically isolated therefrom, and wherein the operating circuit comprises:

a clocked converter (14) which comprises a primary coil (17) and a secondary coil (18), wherein the converter (14) is an LLC resonant converter (14), clocked on the primary side, with half-bridge control, a transformer (61, 62, 63) for detecting an output current ($I_{out}$) of the operating circuit, and a detection device (20) for determining an output voltage ($V_{out}$) of the operating circuit, wherein the detection device (20) comprises an inductor (21) which is arranged on the primary side (11) of the operating circuit and is inductively coupled to the secondary coil (18),
wherein the detection device (20) is configured to determine the output voltage ($V_{out}$) of the operating circuit as a difference between a maximum value (71) of a voltage at the inductor (21) and a voltage correction (74) that is dependent on the output current ($I_{out}$) of the operating circuit,
wherein the operating circuit is configured for power regulation and/or power limitation of an output power of the operating circuit depending on the determined output voltage ($V_{out}$) and the output current ($I_{out}$).

2. Operating circuit according to Claim 1,

wherein a diode (51, 52) is provided between the secondary coil (18) and an output (55) of the operating circuit, wherein the voltage correction (74) is a product of the output current ($I_{out}$) and a differential resistance of the diode.

3. Operating circuit according to either of the preceding claims, wherein the operating circuit is configured to switch on a clocked basis at least one controllable switch (41, 42) of the converter (14) depending on the determined output voltage ($V_{out}$).

4. Operating circuit according to any one of the preceding claims, wherein the inductor (21) is different from the primary coil (17).

5. LED converter, comprising an operating circuit according to any one of the preceding claims.

6. Method for operating an operating circuit for energizing a lamp (5) which comprises at least one light-emitting diode (6), wherein the operating circuit has a primary side (11) and a secondary side (12) galvanically isolated therefrom, and wherein the method includes:

clocked switching of at least one controllable switch of a converter (14) that comprises a primary coil (17) and a secondary coil (18), wherein the converter (14) is an LLC resonant converter (14) clocked on the primary side, with half-bridge control,
detecting an output current ($I_{out}$) of the operating circuit with a transformer (61, 62, 63),
determining an output voltage ($V_{out}$) of the operating circuit depending on a voltage at an inductor (21), wherein the inductor (21) is arranged on the primary side (11) and is inductively coupled to the secondary coil (18),
wherein the output voltage ($V_{out}$) of the operating circuit is determined as a difference between a maximum value (71) of the voltage at the inductor (21) and a voltage correction (74) that is dependent on the output current ($I_{out}$) of the operating circuit, and
regulating and/or limiting an output power of the operating circuit depending on the determined output voltage ($V_{out}$) and the output current ($I_{out}$).

7. Method according to Claim 6, wherein the inductor (21) is different from the primary coil (17).

8. Method according to Claims 6 or 7, which is executed by the operating circuit according to any one of Claims 1 to 4, or by the LED converter (3) according to Claim 5.

**Revendications**

1. Circuit de fonctionnement destiné à l'alimentation d'un moyen d'éclairage (5), lequel comprend au moins une diode électroluminescente (6), dans lequel le circuit de fonctionnement comporte un côté primaire (11) et un côté secondaire (12) séparé par voie galvanique de celui-ci et dans lequel le circuit de fonctionnement comprend :

un convertisseur (14) cadencé, lequel comprend une bobine primaire (17) et une bobine secondaire (18), dans lequel le convertisseur (14) est un convertisseur à résonance LLC (14) cadencé côté primaire à commande en demi-pont,
un transformateur (61, 62, 63) permettant de détecter un courant de sortie ($I_{out}$) du circuit de fonctionnement, et
un dispositif de détection (20) permettant de déterminer une tension de sortie ($V_{out}$) du circuit de fonctionnement,
dans lequel le dispositif de détection (20) comprend une inductance (21) disposée au niveau du côté primaire (11) du circuit de fonctionnement, laquelle est couplée de manière inductive à la bobine secondaire (18),
dans lequel le dispositif de détection (20) est conçu pour déterminer la tension de sortie ($V_{out}$) du circuit de fonctionnement en tant que différence entre une valeur maximale (71) d'une tension au niveau de l'inductance (21) et une correction de tension (74) dépendant du courant de sortie ($I_{out}$) du circuit de fonctionnement,
dans lequel le circuit de fonctionnement est conçu pour réguler la puissance et/ou pour limiter la puissance d'une puissance de sortie du circuit de fonctionnement en fonction de la tension de sortie ($V_{out}$) et du courant de sortie ($I_{out}$) déterminés.

2. Circuit de fonctionnement selon la revendication 1,

   dans lequel une diode (51, 52) est située entre la bobine secondaire (18) et une sortie (55) du circuit de fonctionnement,
   dans lequel la correction de tension (74) est un produit du courant de sortie ($I_{out}$) et d'une résistance différentielle de la diode.

3. Circuit de fonctionnement selon l'une quelconque des revendications précédentes,
   dans lequel le circuit de fonctionnement est conçu pour commuter de manière cadencée au moins un commutateur (41, 42) commandable du convertisseur (14) en fonction de la tension de sortie ($V_{out}$) déterminée.

4. Circuit de fonctionnement selon l'une quelconque des revendications précédentes,
   dans lequel l'inductance (21) est différente de la bobine primaire (17).

5. Convertisseur à DEL, comprenant
   un circuit de fonctionnement selon l'une quelconque des revendications précédentes.

6. Procédé de fonctionnement d'un circuit de fonctionnement destiné à l'alimentation d'un moyen d'éclairage (5), lequel comprend au moins une diode électroluminescente (6), dans lequel le circuit de fonctionnement comporte un côté primaire (11) et un côté secondaire (12) séparé par voie galvanique du celui-ci et dans lequel ledit procédé comprend :

   la commutation cadencée d'au moins un commutateur commandable d'un convertisseur (14), lequel comprend une bobine primaire (17) et une bobine secondaire (18), dans lequel le convertisseur (14) est un convertisseur à résonance LLC (14) cadencé côté primaire à commande en demi-pont,
   la détermination d'un courant de sortie ($I_{out}$) du circuit de fonctionnement à l'aide d'un transformateur (61, 62, 63),
   la détermination d'une tension de sortie ($V_{out}$) du circuit de fonctionnement en fonction d'une tension au niveau d'une inductance (21), dans lequel l'inductance (21) est disposée sur le côté primaire (11) et couplée de manière inductive avec la bobine secondaire (18),
   dans lequel la tension de sortie ($V_{out}$) du circuit de fonctionnement est déterminée en tant que différence entre une valeur maximale (71) d'une tension au niveau de l'inductance (21) et une correction de tension (74) dépendant du courant de sortie ($I_{out}$) du circuit de fonctionnement, et
   la régulation et/ou la limitation d'une puissance de sortie du circuit de fonctionnement en fonction de la tension de sortie ($V_{out}$) et du courant de sortie ($I_{out}$) déterminés.

7. Procédé selon la revendication 6,
   dans lequel l'inductance (21) est différente de la bobine primaire (17).

8. Procédé selon la revendication 6 ou 7,
   lequel est mis en œuvre par le circuit de fonctionnement selon l'une quelconque des revendications 1 à 4 ou par le convertisseur à DEL (3) selon la revendication 5.

FIG. 1

FIG. 2

FIG. 3

FIG. 4

FIG. 5

FIG. 6

FIG. 7

FIG. 8

**IN DER BESCHREIBUNG AUFGEFÜHRTE DOKUMENTE**

**In der Beschreibung aufgeführte Patentdokumente**

- US 2012248998 A1
- US 2014211510 A1
- US 5517397 A
- US 2011187280 A1
- US 2011181205 A1
- WO 2010035155 A2

- EP 2770623 A1
- EP 2493063 A1
- US 2011037414 A1
- DE 102014214744
- DE 102014214746

**In der Beschreibung aufgeführte Nicht-Patentliteratur**

- A NEW CURRENT SENSING SCHEME FOR ZERO-VOLTAGE SWITCHING PHASE-SHIFTED BRIDGE CONVERTER. **LIU Y-F et al.** INTELEC 2000. 22ND. INTERNATIONAL TELECOMMUNICA-TIONS ENERGY CONFERENCE. 10. September 2000, 567-573